# EUROPÄISCHE PATENTANMELDUNG

(11) **EP 1 849 624 A1**
(43) Veröffentlichungstag der Anmeldung: **31.10.2007**
(21) Anmeldenummer: 07007661.7
(22) Anmeldetag: 14.04.2007
(51) Int. Cl.: B60B 3/16, F16B 4/00, F16B 43/00, F16B 35/04

(54) **Lochkreisversatzschraube oder Mutter und Verfahren zu deren Herstellung**

(30) Priorität: 28.04.2006 DE 102006020489
(71) Anmelder: Gundel, Georg, 91166 Georgensgmünd (DE)
(72) Erfinder: Gundel, Georg, 91166 Georgensgmünd (DE)
(74) Vertreter: Schuhmann, Albrecht

(57) **Zusammenfassung**

Lochkreisversatzschraube oder Mutter mit radial verschiebbarem Bund, wobei die Lochkreisversatzschraube (1) oder Mutter mit radial verschiebbarem Bund (2) zweiteilig, bestehend aus Schraube (3) oder Mutter und separatem Bundteil (2) ausgeführt ist und diese Teile unverlierbar miteinander verbunden sind.

## Beschreibung

Die vorliegende Erfindung betrifft eine Lochkreisversatzschraube oder Mutter sowie das Verfahren zu deren Herstellung mit den Merkmalen des Anspruchs 1.

Bei Montagen werden häufig Schrauben mit einem Bund verwendet um Teile in exakte Positionen zu bringen und dort zu fixieren bzw. auch um eine gewisse Klemmung zwischen dem Teil und der Schraube zu erreichen.
Wenn z.B. Schrauben mit einem Kegelbund verwendet werden und das zu montierende Teil eine Senkung aufweist, wird mit Hilfe des Bundes das Bauteil an dieser konischen Verbindung entlang positioniert.
Ein klassisches Anwendungsgebiet dafür ist die Befestigung von Rädern, bzw. Felgen an Radaufhängungen von Fahrzeugen. Die Felge besitzt an ihren Bohrungen in der Regel eine Senkung in welche der Bund der Radschraube eingreift und die Felge somit zum einen in Position bringt und zum anderen wird die Schraube mit dieser Verbindung Kegelbund in der Senkung fixiert, bzw. gesichert und ei Lösen der Schraube währen des Betriebes verhindert.

Bei diesen Montagen, insbesondere bei Verwendung von Ersatzteilen, insbesondere Fremdfelgen kommt es oft vor, dass diese Lochkreise nicht exakt genug ausgeführt sind, bzw. sich zu große Toleranzen ergeben.
Die Folge ist eine nicht mehr exakte Anbringung der Bauteile zueinander, was z.B. im Falle von der Montage einer Felge an einer Radbefestigung dazu führt, dass nicht alle Radschrauben wie gefordert angezogen werden können, weil sich durch die sich ergebenden Toleranzen entlang der ganzen Felge ein Versatz bildet.

Dadurch sitzt nicht jeder Kegelbund exakt in der vorgesehenen Tiefe in der Senkung an der Felge. Dies führt in einigen Fällen zu einer Unwucht in dem entsprechenden Rad und birgt auch ein gewisses Sicherheitsrisiko, da sich eine solche, nicht exakt sitzende Schraube währen des Betriebes auch lösen könnte.

Aufgabe der vorliegenden Erfindung ist es, eine Schraube bzw. Mutter zu schaffen, welche einen Bund aufweist, der in Bereichen axial verschiebbar ist und die genannten Toleranzen ausgleichen kann um die aufgezeigten Nachteile zu überwinden.

Diese Aufgabe wird mit den Merkmalen des Oberbegriffs des Anspruchs 1 gelöst. Fortbildungen und vorteilhafte Ausführungen der Erfindung sind in den weiteren Ansprüchen umfasst.

Erfindungsgemäß ist eine Lochkreisversatzschraube oder Mutter mit axial verschiebbarem Bund dadurch gekennzeichnet, dass die Lochkreisversatzschraübe oder Mutter mit axial verschiebbarem Bund zweiteilig, bestehend aus Schraube oder Mutter und separatem Bundteil ausgeführt ist und diese Teile unverlierbar miteinander verbunden sind.

Die erfindungsgemäße Lochkreisversatz Schraube oder Mutter ist zweiteilig ausgeführt und besteht aus der Schraube bzw. Mutter und einem Bundteil, wobei die Schraube bzw. Mutter mit dem Bundteil unverlierbar verbunden ist. Um die Schraube bzw. Mutter mit dem zugehörigen Bundteil unverlierbar zu verbinden weist die Schraube bzw. Mutter an ihrer dem Bundteil zugewandten Seite im Anschluss an ihren Kopfabschluss dort eine Nut auf, welche im Durchmesser deutlich kleiner als der Durchmesser des Schraubenkopfes ist. An diese Nut schließt sich ein axialer Steg an, welcher im Durchmesser größer als die vorgenannte Nut, aber kleiner als der Schraubenkopf ist.

Das Bundteil weist zur Aufnahme der Schraube bzw. Mutter an der dem Bund abgewandten Seite eine Sackbohrung und eine daran angrenzende größere Nut auf, in welche die Schraube mit ihrem axialen Steg eingreift.

Da der axiale Steg der Schraube bzw. Mutter im Durchmesser größer ausgeführt ist als die Sackbohrung im Bundteil bleibt die Schraube mit dem Bundteil verbunden, da der axiale Steg im montierten Zustand von Schraube und Bundteil nicht über die Kante zwischen Nut und Sackbohrung im Bundteil entweichen kann.

Durch die entsprechend ausgeführten Durchmesser von Nut und Steg an der Schraube bzw. Mutter, sowie der ausgeführten Durchmesser von Sackbohrung und Nut im Bundteil wird eine entsprechende, mögliche axiale Verschiebung des Bundteils und der Schraube festgelegt.
Das Bundteil welches wahlweise mit einem Kegel oder Kugelbund ausgeführt ist kann axial auf der Schraube hin und her bewegt werden, wobei die mögliche axiale Verschiebung, wie beschrieben von der Auslegung der entsprechenden Durchmesser von Nut und Steg in der Schraube bzw. Mutter und der Sackbohrung und Nut im Bundteil abhängen.
Der gewünschte, mögliche axiale Versatz (Lochkreisversatz) wird mit dem Verhältnis der genannten Durchmesser zueinander festgelegt.

Da wie beschrieben, der Durchmesser des axialen Steges der Schraube oder Mutter größer ist als die Sackbohrung in dem Bundteil, wodurch die beiden Teile unverlierbar miteinander verbunden sind, ist ein spezielles, erfindungsgemäßes Montageverfahren notwendig.
Dabei werden die beiden Teile jeweils einer thermischen Behandlung unterzogen und zwar wird die Schraube bzw. Mutter abgekühlt und das Bundteil gleichzeitig erwärm.
Durch die Erwärmung des Bundteiles dehnt sich dieses entsprechend aus, der Durchmesser der Sackbohrung vergrößert sich. Durch das gleichzeitige Abkühlen der Schraube bzw. Mutter zieht sich diese zusammen, der Durchmesser des axialen Steges an der Schraube bzw. Mutter wird demnach kleiner.
Die vorher festgelegten Durchmesser sind so ausgelegt, dass durch die sich währen der thermischen Behandlungen ergebenden Differenzen in den genannten Durchmessern, die Änderungen ausreichen, damit der axiale Steg in der Schraube bzw. Mutter kleiner als die Sackbohrung in dem Bundteil ist, womit der axiale Steg über die Kante der Sackbohrung zur Nut im Bundteil geführt werden kann.

Nun lässt man die beiden Teile auskühlen, bzw. sich erwärmen, wodurch sich die ursprünglichen Durchmesser wieder einstellen.
Der Durchmesser des axialen Steges ist nun wieder größer als die Sackbohrung im Bundteil und der Steg der Schraube bzw. Mutter blockiert an der Kante der Nut und der Sackbohrung im Bundteil.
Die beiden Teile sind damit unverlierbar miteinander verbunden und des Bundteil bleibt gegenüber der Schraube bzw. Mutter axial verschiebbar.

Im Folgenden wird die Erfindung anhand von Zeichnungen beispielhaft näher beschrieben. Es zeigen:
- Fig. 1: eine Lochkreisversatzschraube mit montiertem Bundteil
- Fig. 2: eine Lochkreisversatzschraube ohne montiertem Bundteil
- Fig. 3: ein Bundteil einzeln
- Fig. 4: Anwendungssituation ohne axiale Verschiebung
- Fig. 5: Anwendungssituation mit maximaler axialer Verschiebung.

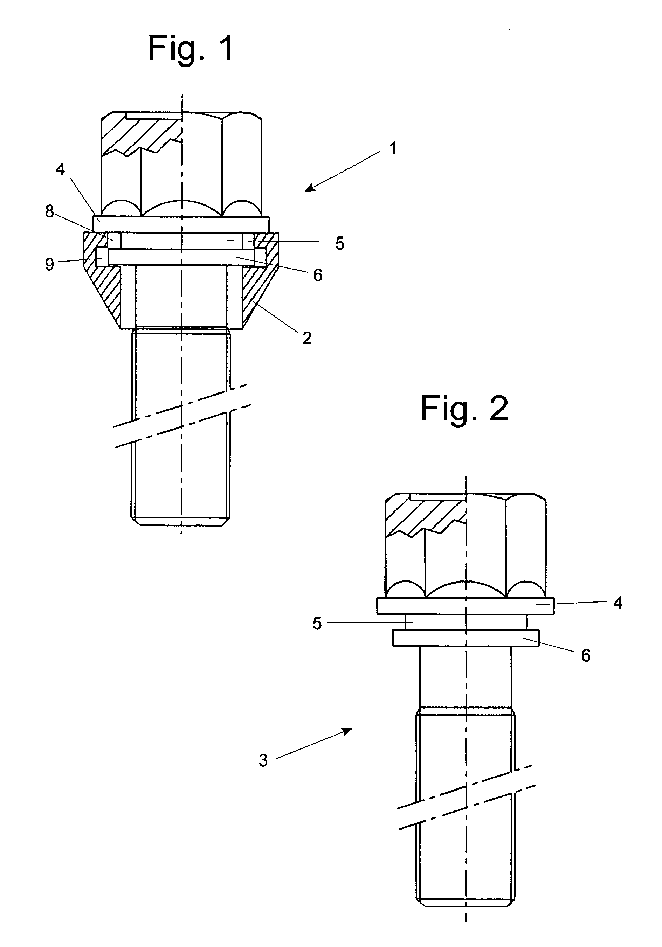

Wie in Fig. 1 gezeigt, ist das Bundteil 2 nach dem erfindungsgemäßen Zusammenbau von Schraube 3 und Bundteil 2 mit der Schraube 3 verbunden, wobei der Halt dadurch erfolgt, dass der axiale Steg 6 der Schraube 3 nicht mehr über die Kante zwischen der Sackbohrung 8 und die Nut 9 im Bundteil 2 gelangen kann das Bundteil 2 wird somit an dieser Stelle mit der Schraube 3 gehalten.
Die mögliche axiale Verschiebung ist, wie hier gezeigt die Differenz der Durchmesser zwischen Nut 5 zur Sackbohrung 8, bzw. des axialen Stegs 6 zur Nut 9.

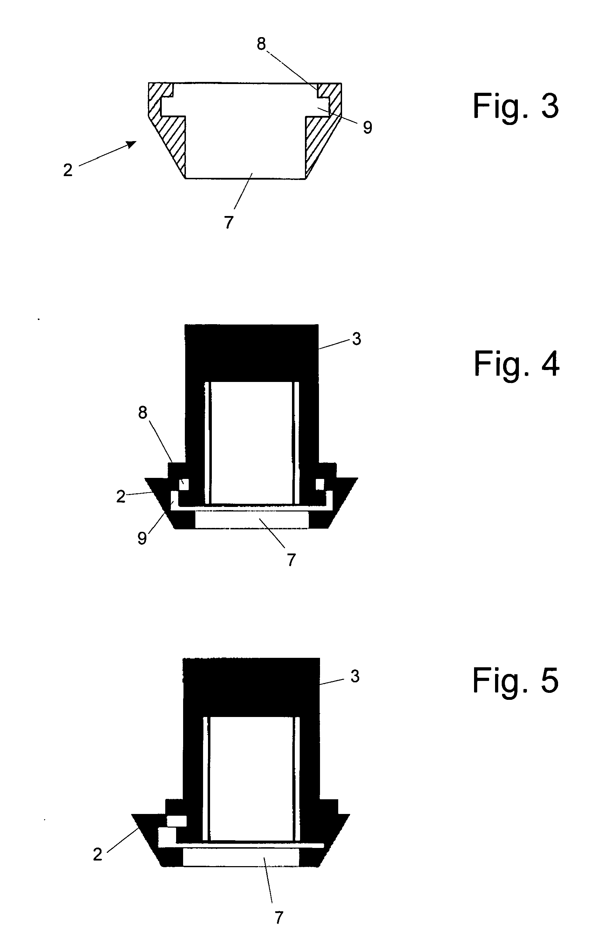

Fig. 2 zeigt eine Schraube 3 vor der Montage des in Fig. 3 gezeigten Bundteils (2) welche vor der Montage abgekühlt wird, wodurch sich auch der Durchmesser des axialen Steges 6 leicht verringert. Diese Reduzierung des Durchmesser des Steges 6 zusammen mit der Erweiterung der Sackbohrung 8 im Bundteil 2 durch Erwärmen des Bundteiles führt dazu, dass die beiden Teile zusammengeführt werden können. Nach abkühlen des Bundteiles 2 und erwärmen der Schraube 3 sind die beiden Teile miteinander verbunden.

In Fig. 4 und Fig. 5 sind Anwendungsbeispiele schematisch dargestellt, wobei Fig. 4 eine Einbausituation ohne axiale Verschiebung der Schraube 3 zum Bundteil 2 darstellt und in Fig. 5 die maximale axiale Verschiebung des Bundteils 2 gegenüber der Schraube 3 zu sehen ist.

## Patentansprüche

1. Lochkreisversatzschraube oder Mutter mit axial verschiebbarem Bund,
**dadurch gekennzeichnet,**
**dass** die Lochkreisversatzschraube (1) oder Mutter mit axial verschiebbarem Bund (2) zweiteilig, bestehend aus Schraube (3) oder Mutter und separatem Bundteil (2) ausgeführt ist und diese Teile unverlierbar miteinander verbunden sind.

2. Lochkreisversatzschraube oder Mutter nach Anspruch 1,
**dadurch gekennzeichnet,**
**dass** die Schraube (3) oder Mutter einen Kopfabschluss (4) aufweist und wenigstens einseitig mit zusätzlich einer an den Kopfabschluss (4) angrenzenden axialen Nut (5) und daran angrenzendem axialen Steg (6), mit kleinerem Durchmessers als der Kopfabschluss (4), ausgeführt ist.

3. Lochkreisversatzschraube oder Mutter nach Anspruch 1
**dadurch gekennzeichnet,**
**dass** das Bundteil (2) zusätzlich zu seinem durchgehenden Lochkreis (7) auf seiner dem Bund abgewiesenen Seite eine Sackbohrung (8) mit daran angrenzender Nut (9) aufweist.

4. Lochkreisversatzschraube oder Mutter nach Anspruch 1 bis 3
**dadurch gekennzeichnet,**
**dass** der axiale Steg (6) der Schraube (3) oder Mutter einen größeren Durchmesser aufweist als die Sackbohrung (8) des Bundteiles (2), wobei der Steg (6) der Schraube (3) oder Mutter aber einen kleineren Durchmesser als die Nut (9) im Bundteil (2) aufweist und die Nut (5) der Schraube (3) oder Mutter einen kleineren Durchmesser als die Sackbohrung (8) des Bundteiles (2) aufweist.

5. Bundteil nach Anspruch 3,
**dadurch gekennzeichnet,**
**dass** der Bund ein Kegelbund ist.

6. Bundteil nach Anspruch 3,
**dadurch gekennzeichnet,**
**dass** der Bund ein Kugelbund ist.

7. Verfahren zur Herstellung der Lochkreisversatzschraube nach Anspruch 1 bis 6,
**dadurch gekennzeichnet,**
**dass** die Einzelteile, Schraube (3) oder Mutter und Bundteil (2) vor der Montage einer thermischen Behandlung unterzogen werden.

8. Verfahren zur Herstellung der Lochkreisversatzschraube nach Anspruch 1 bis 6,
**dadurch gekennzeichnet,**
**dass** die Schraube (3) oder Mutter vor der Montage erwärmt und das Bundteil (2) gleichzeitig abgekühlt wird.
